# FASCICULE DE BREVET EUROPEEN

(11) **EP 0 750 068 B1**
(45) Date de publication et mention de la délivrance du brevet: **11.03.1998**
(21) Numéro de dépôt: 96401166.2
(22) Date de dépôt: 31.05.1996
(51) Int. Cl.: D21C 11/00, D21C 11/08, D21C 3/22

(54) **Procédé de traitement des rejets gazeux issus du procédé Kraft à l'aide de dérivés de l'acide undécylénique et/ou undécynoique**
Behandlung der Abgase eines Kraft-Verfahrens mittels Derivaten von Undecylen- und/oder Undecylsäure
Treatment of gas effluents from a Kraft process using undecylenic and/or undecynoic acid derivatives

(30) Priorité: 22.06.1995 FR 9507476
(43) Date de publication de la demande: 27.12.1996
(73) Titulaire: ELF ATOCHEM S.A., 92800 Puteaux (FR)
(72) Inventeur: Bourson, Lucien, 92290 Bois-Colombes (FR); Caupin, Henri-Jean, 78000 Versailles (FR)

(56) Documents cités:
- DE-A- 3 305 988
- FR-A- 2 694 197
- US-A- 2 709 133

## Description

La présente invention a trait au domaine de l'industrie de la pâte à papier. Elle concerne un procédé de réduction de la charge polluante en composés soufrés volatils générés lors de la préparation des pâtes chimiques selon le procédé Kraft.

Le procédé Kraft est le procédé de préparation de pâtes chimiques le plus répandu dans le monde. Il consiste à faire réagir dans un lessiveur du bois de feuillus ou de résineux avec un mélange de soude et de sulfure de sodium (liqueur blanche) à une température de l'ordre de 170°C pendant plusieurs heures.

Lors de la cuisson, il se forme des composés organiques soufrés volatils, en particulier l'hydrogène sulfuré, les mercaptans et le diméthylsulfure, dont l'odeur nauséabonde est perceptible à plusieurs kilomètres autour du site de fabrication de la pâte.

Les principales sources de ces composés malodorants sont les gaz de cuisson et les gaz issus des opérations d'évaporation de la liqueur noire.

On connaît des moyens de réduire la nuisance olfactive dans le domaine de la papeterie.

Ainsi, on a proposé de collecter les gaz émis lors des opérations de cuisson et de concentration de la liqueur noire et de les traiter de deux manières. La première manière consiste à diriger les gaz vers une installation de combustion qui peut être le four à chaux, la chaudière de récupération ou un four auxiliaire spécial. La deuxième manière nécessite la transformation des composés soufrés en SO₂ qui peut être éliminé par lavage des gaz avec de l'eau.

Dans la demande de brevet FR 9209457, on a aussi proposé de désodoriser les effluents aqueux de papeterie à l'aide d'esters d'acide undécylénique.

Les traitements qui viennent d'être cités présentent toutefois des inconvénients.

Ainsi, la collecte des gaz soufrés nécessite un appareillage lourd et coûteux, notamment parce que ces gaz s'avèrent particulièrement odorants à très faible concentration.

L'utilisation du désodorisant précité permet de diminuer le degré de perception olfactive des effluents et non de prévenir la formation des composés nauséabonds.

Il a maintenant été trouvé qu'en procédant à l'ajout d'un composé du type ester ou sel d'acide undécylénique et/ou undécynoïque dans la liqueur blanche et/ou la liqueur noire, on peut réduire la teneur en composés soufrés dans les gaz émis lors des opérations de cuisson et/ou de concentration.

La présente invention a donc pour objet un procédé permettant de réduire voire d'empêcher l'émission des rejets gazeux nauséabonds des usines de pâtes à papier selon le procédé Kraft, ce procédé étant caractérisé en ce qu'il consiste à mettre en présence de liqueur blanche et/ou de liqueur noire avec au moins un ester alkylique et/ou polyoxyalkénique ou un sel d'acide undécylénique et/ou undécynoïque.

L'invention concerne plus particulièrement un tel procédé dans lequel le(s) composé(s) précité(s) est (sont) mis en oeuvre en présence de liqueur noire.

L'ester alkylique d'acide undécylénique et/ou undécynoïque selon l'invention est généralement choisi parmi les esters renfermant de 1 à 12 atomes de carbone et de préférence 1 atome de carbone.

L'ester polyoxyalkénique d'acide undécylénique et/ou undécynoïque selon l'invention est généralement choisi parmi les esters renfermant de 2 à 10 motifs oxyalkylène. De préférence, on utilise les esters de polyoxyéthylène, polyoxypropylène et poly(oxyéthylène) (oxypropylène), et avantageusement l'ester polyoxyéthylénique d'acide undécylénique à 2 motifs oxyéthylène.

Le sel métallique d'acide undécylénique et/ou undécynoïque selon l'invention est généralement choisi parmi les sels de métaux alcalins, par exemple Na et K, et alcalino-terreux, par exemple Ca, et les sels de Cu et Zn. On utilise avantageusement le sel de sodium de l'acide undécylénique.

Dans le procédé selon l'invention, le sel de sodium de l'acide undécylénique et/ou undécynoïque peut être obtenu par réaction du(des) précurseur(s) acide(s) correspondant(s) avec la soude contenue dans la liqueur blanche ou noire.

Les composés précités peuvent être mis en oeuvre sous forme de poudre, de solution, de suspension ou d'émulsion généralement dans l'eau. On donne la préférence aux solutions et émulsions.

Les composés précités sont de manière générale efficaces à faible dose, par exemple de l'ordre de 0,01 à 1 % en poids par rapport à la masse de végétal sec à traiter et de préférence de 0,05 à 0,3 %.

Lorsque le procédé selon l'invention est mis en oeuvre en présence de la liqueur blanche, cette dernière présente une composition conventionnelle. Généralement, la solution aqueuse constituant ladite liqueur renferme de 10 à 35 % d'alcali actif (NaOH + Na₂S) exprimé en équivalent soude, de 10 à 45 % de sulfidité (Na₂S/(NaOH + Na₂S)) apportée par Na₂S ou le polysulfure de sodium, et éventuellement jusqu'à 10 % de fleur de soufre, ces teneurs étant exprimées en % en poids par rapport au poids de végétal sec à traiter.

De manière conventionnelle, la liqueur blanche est utilisée dans le procédé selon l'invention de telle sorte que le rapport du poids de liqueur au poids de végétal sec à traiter est compris entre 2 et 6 et de préférence de l'ordre de 4.

On peut utiliser tout type de végétal utilisé conventionnellement dans le procédé Kraft par exemple des bois de résineux ou de feuillus, ou des plantes annuelles.

Les conditions de température et de durée de traitement dans le lessiveur sont classiques et ne constituent pas un objet de la présente invention. Généralement, la température est comprise entre 140 et 190°C et de préférence entre 170 et 180°C et la durée est comprise entre 1 et 6 heures et de préférence de 2,5 et 3,5 heures.

Le procédé selon l'invention peut également être mis en oeuvre en présence de liqueur noire issue de la cuisson réalisée dans les conditions précitées. Dans cette variante, l'ester alkylique et/ou polyoxyalkénique ou le sel d'acide undécylénique et/ou undécynoïque est ajouté avant l'évaporation de la liqueur noire.

Lesdits composés de l'acide undécylénique et/ou undécynoïque sont de préférence ajoutés à une concentration de 0,01 à 1 % et avantageusement de 0,05 à 0,3 % en poids par rapport au poids de végétal sec mis en oeuvre lors de l'étape de cuisson.

La liqueur noire ainsi obtenue est concentrée de manière continue à une température généralement inférieure à celle du lessiveur.

Après concentration, la liqueur noire ainsi obtenue est brûlée dans une chaudière de régénération. Les résidus solides issus de la combustion sont ensuite utilisés dans la préparation de la liqueur blanche (étape de caustification).

Les exemples qui suivent permettent d'illustrer l'invention.

Dans ces exemples, la teneur en hydrogène sulfuré (H₂S), méthylmercaptan (CH₃SH) et diméthylsulfure [(CH₃)₂S] est mesurée par chromatographie en phase gazeuse (chromatographe UNICAM® série 610; colonne Carbopak, longueur 2 m; détecteur FPD). Les résultats sont exprimés en % de réduction par rapport à un essai témoin réalisé sans ajout des composés de l'acide undécylénique et/ou undécynoïque.

La mesure de la perception olfactive est effectuée par un groupe de six personnes qui attribuent une note de 0 (absence d'odeur) à 10 (odeur du témoin sans ajout des composés de l'acide undécylénique et/ou undécynoïque). La note olfactive indiquée dans les exemples est la moyenne des 6 notes attribuées.

### EXEMPLES 1 A 7

Dans un lessiveur de laboratoire de 4 l de volume utile, on introduit
- 400 g de copeaux humides de bois de résineux (soit 200 g de copeaux secs),
- 16,25 % en poids de NaOH et 8,75 % en poids de Na₂S par rapport au poids de copeaux secs (alcalinité = 25 %; sulfidité = 35 %).
- de l'eau en quantité suffisante pour obtenir un rapport en poids liqueur/végétal = 4
- 0,4 ou 1,0 g respectivement des composés suivants :
   - undécylénate de méthyle, sous forme d'une émulsion à 10 % en poids dans l'eau (MASKOD®MNS 01-10 commercialisé par Delta Agro Industries - France) (exemples 1 et 2)
   - undécylénate de sodium, sous forme d'une solution à 35 % en poids dans l'eau (exemples 3 et 4)
   - ester polyoxyéthylénique d'acide undécylénique à 2 motifs oxyéthylène (exemples 5 et 6).

Le lessiveur est porté à 170°C et maintenu à cette température pendant 3 heures. Le lessiveur est dégazé et les gaz de cuisson sont récupérés dans une enveloppe étanche aux gaz.

Les mesures de la réduction de la teneur en (H₂S + CH₃SH) et de la note olfactive sont présentées dans le tableau 1. Ces mesures sont exprimées par rapport à un essai témoin réalisé sans ajout de composés de l'acide undécylénique (exemple 7).

**TABLEAU 1**

| **EXEMPLE** | **REDUCTION DE LA TENEUR EN (H**_{**2**}**S+CH**_{**3**}**SH) (%)** | **NOTE OLFACTIVE** |
|---|---|---|
| 1 | 80 | 3 |
| 2 | 50 | 5 |
| 3 | 80 | 2 |
| 4 | 50 | 5 |
| 5 | 50 | 5 |
| 6 | 30 | 6 |
| 7 | 0 | 10 |

### EXEMPLES 8 A 14

Dans un lessiveur de laboratoire de 4 l de volume utile, on introduit
- 400 g de copeaux humides de bois de résineux (soit 200 g de copeaux secs),
- 16,25 % en poids de NaOH et 8,75 % en poids de Na₂S par rapport au poids de copeaux secs (alcalinité = 25 %; sulfidité = 35 %).
- de l'eau en quantité suffisante pour obtenir un rapport en poids liqueur/végétal = 4

Le lessiveur est porté à 170°C et maintenu à cette température pendant 3 heures. Le lessiveur est dégazé et les gaz de cuisson sont récupérés dans une enveloppe étanche aux gaz.

A la liqueur noire issue de la cuisson, on ajoute 0,4 g ou 1,0 g respectivement des composés suivants :
- undécylénate de méthyle, sous forme d'une émulsion à 10 % en poids dans l'eau (MASKOD® MNS 01-10 commercialisé par Delta Agro Industries - France) (exemples 8 et 9)
- undécylénate de sodium, sous forme d'une solution à 35 % en poids dans l'eau (exemples 10 et 11)
- ester polyoxyéthylénique d'acide undécylénique à 2 motifs oxyéthylène (exemples 12 et 13).

La liqueur noire ainsi obtenue est concentrée par ébullition. Sur la fraction incondensable, on mesure d'une part la teneur en (H₂S + CH₃SH) et d'autre part la note olfactive par rapport à un essai témoin réalisé sans ajout de composés de l'acide undécylénique (exemple 14).

Les résultats sont présentés dans le tableau 2.

**TABLEAU 2**

| **EXEMPLE** | **REDUCTION DE LA TENEUR EN (H**_{**2**}**S+CH**_{**3**}**SH) (%)** | **NOTE OLFACTIVE** |
|---|---|---|
| 8 | 70 | 2 |
| 9 | 60 | 4 |
| 10 | 70 | 2 |
| 11 | 60 | 5 |
| 12 | 60 | 4 |
| 13 | 45 | 6 |
| 14 | 0 | 10 |

### EXEMPLES 15 A 16

Dans un lessiveur de laboratoire de 4 l de volume utile, on introduit
- 400 g de copeaux humides de bois de feuillus (soit 200 g de copeaux secs),
- NaOH et Na₂S en quantité suffisante pour obtenir une alcalinité et une sulfidité égale à 28 % et 30 % respectivement,
- de l'eau en quantité suffisante pour obtenir un rapport en poids liqueur/végétal = 4
- 0,5 g des composés suivants :
   - undécylénate de méthyle, sous forme d'une émulsion à 10 % en poids dans l'eau (MASKOD® MNS 01-10 commercialisé par Delta Agro Industries - France) (exemple 15)
   - undécylénate d'éthyle sous forme d'une émulsion à 10 % en poids dans l'eau (exemple 16)

Le lessiveur est porté à 170°C et maintenu à cette température pendant 90 minutes. Le lessiveur est dégazé et les gaz de cuisson dont récupérés dans une enveloppe étanche aux gaz.

Les mesures de la réduction de la teneur en CH₃SH et (CH₃)₂S sont présentées dans le tableau 3. Ces mesures sont exprimées par rapport à un essai témoin réalisé sans ajout de composés de l'acide undécylénique.

**TABLEAU 3**

| **EXEMPLE** | **REDUCTION DE LA TENEUR EN CH**_{**3**}**SH (%)** | **REDUCTION DE LA TENEUR EN (CH**_{**3**}**)**_{**2**}**S** |
|---|---|---|
| 15 | 95,7 | 69,7 |
| 16 | 77,8 | 47,0 |

### EXEMPLE 17

Dans un lessiveur de laboratoire de 4 l de volume utile, on introduit
- 400 g de copeaux humides de bois de résineux (soit 200 g de copeaux secs),
- 16,25 % en poids de NaOH et 8,75 % en poids de Na₂S par rapport au poids de copeaux secs (alcalinité : 25 % ; sulfidité : 35 %)
- de l'eau en quantité suffisante pour obtenir un rapport en poids liqueur/végétal = 4
- 1 g d'undécynoate de sodium.

Le lessiveur est porté à 170°C et maintenu à cette température pendant 3 heures. Le lessiveur est dégazé et les gaz de cuisson dont récupérés dans une enveloppe étanche aux gaz.

La réduction de la teneur en (H₂S + CH₃SH + (CH₃)₂S) est égale à 75 %.

## Revendications

1. Procédé de traitement des rejets gazeux renfermant des composés organiques soufrés volatils générés par le procédé Kraft caractérisé en ce qu'il consiste à mettre en présence la liqueur blanche et/ou noire avec au moins un ester alkylique et/ou polyoxyalkénique ou un sel d'acide undécylénique et/ou undécynoïque.

2. Procédé selon la revendication 1 caractérisé en ce que l'ester alkylique est choisi parmi les esters renfermant de 1 à 12 atomes de carbone.

3. Procédé selon la revendication 2 caractérisé en ce que l'ester est l'undécylénate de méthyle.

4. Procédé selon l'une des revendications 1 à 3 caractérisé en ce que l'ester polyoxyalkénique est choisi parmi les esters renfermant de 2 à 10 motifs oxyalkylène.

5. Procédé selon la revendication 4 caractérisé en ce que l'ester est l'ester polyoxyéthylénique d'acide undécylénique à 2 motifs oxyéthylène.

6. Procédé selon l'une des revendications 1 à 5 caractérisé en ce que le sel métallique est choisi parmi les sels de métaux alcalins et alcalino-terreux, de Zn et de Cu.

7. Procédé selon la revendication 6 caractérisé en ce que le sel est l'undécylénate de sodium.

8. Procédé selon la revendication 1 caractérisé en ce que l'on utilise lesdits composés de l'acide undécylénique et/ou undécynoïque à une concentration comprise entre 0,01 et 1 % en poids par rapport au poids de végétal sec.

9. Liqueur blanche ou noire issue du procédé Kraft caractérisée en ce qu'elle contient au moins un ester alkylique et/ou polyoxyalkénique ou un sel d'acide undécylénique et/ou undécynoïque.

## Patentansprüche

1. Verfahren zur Behandlung von Abgasen, die flüchtige organische Schwefelverbindungen enthalten, die aus dem Kraft-Prozeß stammen, dadurch gekennzeichnet, daß man die Weißlauge und/oder Schwarzlauge mit mindestens einem Alkyl- und/oder Polyoxyalkenylester oder einem Undecylen- und/oder Undecylsäuresalz versetzt.

2. Verfahren nach Anspruch 1, dadurch gekennzeichnet, daß der Alkylester ausgewählt ist aus Estern mit 1 bis 12 Kohlenstoffatomen.

3. Verfahren nach Anspruch 2, dadurch gekennzeichnet, daß der Ester Methylundecylenat (Undecylensäuremethylester) ist.

4. Verfahren nach einem der Ansprüche 1 bis 3, dadurch gekennzeichnet, daß der Polyoxyalkenylester ausgewählt ist aus Estern mit 2 bis 10 Oxyalkyleneinheiten.

5. Verfahren nach Anspruch 4, dadurch gekennzeichnet, daß der Ester der Polyoxyethylenester der Undecylensäure mit 2 Oxyethyleneinheiten ist.

6. Verfahren nach einem der Ansprüche 1 bis 5, dadurch gekennzeichnet, daß das Metallsalz ausgewählt ist aus Alkalimetall-, Erdalkalimetall-, Zn- und Cu-Salzen.

7. Verfahren nach Anspruch 6, dadurch gekennzeichnet, daß das Salz Natriumundecylenat ist.

8. Verfahren nach Anspruch 1, dadurch gekennzeichnet, daß man die Undecylen- und/oder Undecylsäureverbindungen mit einer Konzentration von 0,01 bis 1 Gew.-% verwendet, bezogen auf das pflanzliche Trockengewicht.

9. Weiß- oder Schwarzlauge aus dem Kraft-Prozeß, dadurch gekennzeichnet, daß sie mindestens einen Alkyl- und/oder Polyoxyalkenylester oder ein Undecylen- und/oder Undecylsäuresalz enthält.

## Claims

1. Process for the treatment of gaseous discharges containing volatile organic sulphur compounds generated by the Kraft process, characterized in that it consists in bringing the white and/or black liquor into contact with at least one alkyl and/or polyoxyalkenyl ester or a salt of undecylenic and/or undecynoic acid.

2. Process according to Claim 1, characterized in that the alkyl ester is chosen from the esters containing from 1 to 12 carbon atoms.

3. Process according to Claim 2, characterized in that the ester is methyl undecylenate.

4. Process according to one of Claims 1 to 3, characterized in that the polyoxyalkenyl ester is chosen from the esters containing from 2 to 10 oxyalkylene units.

5. Process according to Claim 4, characterized in that the ester is the polyoxyethylene ester of undecylenic acid containing 2 oxyethylene units.

6. Process according to one of Claims 1 to 5, characterized in that the metal salt is chosen from alkali and alkaline-earth metal, Zn and Cu salts.

7. Process according to Claim 6, characterized in that the salt is sodium undecylenate.

8. Process according to Claim 1, characterized in that the said compounds of undecylenic and/or undecynoic acid are employed in a concentration of between of 0.01 and 1 % by weight relative to the weight of dry vegetable.

9. White or black liquor originating from the Kraft process, characterized in that it contains at least one alkyl and/or polyoxyalkenyl ester or a salt of undecylenic and/or undecynoic acid.
